# EUROPEAN PATENT SPECIFICATION

(11) **EP 2 429 957 B1**
(45) Date of publication and mention of the grant of the patent: **29.07.2015**
(21) Application number: 10719055.5
(22) Date of filing: 05.05.2010
(51) Int. Cl.: C02F 5/10, C08L 43/00, C08L 85/04, C09K 11/00, C12Q 1/00, G01N 21/00, G01N 33/00

(54) **TAGGED SCALE INHIBITORS**
MARKIERTE KESSELSTEINHEMMER
AGENTS ANTITARTRE MARQUÉS

(30) Priority: 06.05.2009 GB 0907732
(43) Date of publication of application: 21.03.2012
(73) Proprietor: Absolute Petro Hydro Tech Co. Ltd, Sichuan (CN)
(72) Inventor: ZHOU, Kang, Sichuan (CN); CHEN, Li, Sichuan (CN)
(74) Representative: Gordon, Kirsteen Helen
(86) International application number: PCT/GB2010/050734
(87) International publication number: WO 2010/128322

(56) References cited:
- US-A1- 2007 267 193

## Description

### FIELD OF THE INVENTION

The present invention provides a polymeric scale inhibitor and, in particular, a polymeric scale inhibitor comprising at least one boron atom. The boron atom is included in the inhibitor as a label or "tag" to facilitate detection of the polymer. The invention also relates to compositions comprising the tagged polymeric inhibitor, to methods of making the tagged polymeric inhibitor and to methods employing the tagged polymeric inhibitor.

### BACKGROUND TO INVENTION

During the operation of a hydrocarbon well (i.e. a gas or oil well) various downhole problems can arise including the deposition of scale. Scale arises as a result of the commingling of incompatible aqueous fluids in the formation (i.e. the rock). For example, where sea water is injected into a subterranean formation to drive oil through the formation into a producer well hole, differences in the nature of the ions present in the injection water and that already present in the formation may cause the precipitation of metal salts. In the North Sea, typical scale problems are related to the formation of inorganic salts such as BaSO₄, SrSO₄, CaSO₄ and CaCO₃. These salts precipitate as scale which, if left untreated, causes scaling of subsurface and surface production equipment and/or tubing and, eventually, blockage of the well hole.

To prevent or minimise scale formation in a hydrocarbon system, a scale inhibitor, optionally in combination with a bridging agent, may be used. To carry out treatment with a scale inhibitor, squeeze treatments are normally the preferred option. In a squeeze treatment, a solution of scale inhibitor is injected into the formation through a producer well hole after a pre-flush. After a shut-in, well production is then resumed. Ideally the production water then slowly leaches or washes out the treatment agent from the formation. More specifically the leaching process ideally places a low, but still effective, concentration of the treatment agent in the produced water to prevent scale formation or deposition. Depending on the scale inhibitor retention and release properties in the formation, however, the effect of this treatment may last from one month to about 24 months. Usually the concentration of inhibitor in the produced water is initially high, and much greater than that required to prevent scale formation, as a result of inhibitor failing to be retained by the formation. Thereafter the concentration of scale inhibitor tends to decrease until it eventually falls below the minimum required to prevent scale deposition, i.e. below the minimum inhibitory concentration (MIC).

It is therefore critically important when treating hydrocarbon wells to be able to determine the presence of scale inhibitors in produced fluids and, in particular, to be able to determine the amount of inhibitor present therein. This analysis indicates how effectively the scale inhibitor is retained by the formation and thus provides a measure of the inhibitor performance. More critically, this analysis also indicates when further scale inhibitor should be applied. Ideally further additions of scale inhibitor are made just before the concentration drops below the MIC, which may be as low as 10-50 ppm wt. It is therefore highly desirable that very low of amounts of scale inhibitor can be accurately determined.

At present two methods are widely used for determining the amount of scale inhibitors in produced fluid. These are inductively coupled plasma-optical emission spectrometry (ICP-OES) and turbidimetry with hyamine. The method of choice depends on the structure of the inhibitor to be analysed; those inhibitors containing a significant percentage of phosphorus are usually analysed by ICP-OES whilst those inhibitors containing little, or no, phosphorus and which undergo reaction with the hyamine reagent have typically been analysed by the turbidimetric test. However the measurement of commercially available scale inhibitors by these methods suffers from disadvantages.

ICP-OES will measure any phosphorus present in a sample and thus will not differentiate between phosphorus that is present in the scale inhibitor to be measured and phosphorus of any other origin (e.g. phosphorus in other agents and/or naturally present in the formation). This can introduce significant error into the reported result. Moreover it is also expected that opportunities to apply this method will rapidly decrease since, due to environmental concerns, the use of scale inhibitors comprising significant levels of phosphorus is decreasing. Indeed in the North sea, scale inhibitors having low or no phosphorus are already the species of choice in many fields.

The turbidimetry test with hyamine is based on the fact that hyamine 1622 gives a turbid solution when it contacts an anionic species (e.g. a scale inhibitor). The level of turbidity can be measured, e.g. by UV, to determine the concentration of anionic species. The hyamine-anionic species reaction is not, however, selective. Thus in the case of samples deriving from oil wells, hyamine 1622 will also react with chloride ions (and other anions present in sea water). The use of this test on oil well samples therefore necessitates a complex clean up procedure to remove brine ions (e.g. Cl⁻) from the sample to be tested. The clean up operation is, however, difficult as it must remove high concentrations of chloride ions but leave the low concentrations of scale inhibitors unaffected.

A further drawback of the turbidimetry test is that the subsequent detection of the turbid complex by UV spectroscopy is not straightforward. The hyamine 1622-anion complex exhibits a 3rd order polynomial response (i.e. a non-linear response) which gives rise to inaccuracies in the calibration and subsequent determination of results.

The determination of commercially available scale inhibitors in produced fluid is therefore problematic.

The idea of specifically labelling or "tagging" scale inhibitors to facilitate their detection is known. EP-A-0157465, for example, discloses anti-scaling polymer compositions that are marked or "labelled" with groups that can react with a second component to impact colour to the composition thereby allowing the polymer to be detected. Typically the anti-scaling polymer is provided with an aromatic nucleus bearing one or more groups that react with diazonium compounds to give coloured products. Thus a water sample can be removed from a water-containing system, a diazonium compound added and the amount of anti-scaling polymer present in the system determined by the level of colour detected. Such systems are not, however, widely used on a commercial basis. Ions, and other species present in sea water, have been found to interfere with the colour-generating reaction necessary to be able to assess scale inhibitor concentration, therefore the method is not sufficiently reliable to allow the accurate determination of the low levels of scale inhibitor present in produced fluid.

In WO01/44403 and WO2005/000747 a different tagging strategy is used wherein tags are incorporated into the monomers used to form the polymeric scale inhibitor. As a result, the tags are incorporated into the structure of the polymeric scale inhibitor during polymerisation and are present *in situ.* In both of WO01/44403 and WO2005/000747 the tags comprise a conjugated aromatic group designed for detection by fluorometry. The tags therefore incorporate large, sterically hindered groups into the structure of the polymeric scale inhibitor. Such inhibitors have the advantage that they can be detected directly (i.e. they do not need to undergo a reaction to enable their detection). On the other hand, however, the introduction of sterically hindering groups into the monomer *per se* may affect their polymerisation rates and makes the polymers expensive. As far as the applicants are aware, none of these tags are currently used in oil field production.

In WO2005/000747 (US2007/267193) a variety of tagged scale inhibitors is disclosed. This is because different tagged inhibitors are injected into different oil wells or production zones and analysis of the different tags in the outflow enables the producer to determine which well, if any, requires treatment.

Hence there is still a need for alternative polymeric scale inhibitors that can be readily detected and assessed, and in particular for tagged polymeric scale inhibitors that can be detected in very low amounts. Tagged polymeric scale inhibitors that can be easily and cheaply prepared are especially desirable, particularly in light of the volumes in which they may be used.

It has now been surprisingly found that polymeric scale inhibitors comprising boron have excellent anti-scallng properties and are readily detectable using conventional equipment, e.g. using ICP-OES. Advantageously the boron tagged polymeric inhibitors are also facile and inexpensive to prepare.

### SUMMARY OF INVENTION

Thus viewed from one aspect, the present invention provides a polymeric scale inhibitor, wherein said inhibitor comprises at least one boron atom present in a side chain comprising a group of formula (II): 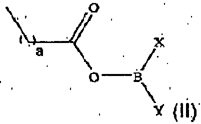 wherein X and Y are each independently R', OR' or OCOR', where R' is H or optionally substituted organic radicals having from 1 to 20 carbon atoms; and a is 0 or an integer from 1 to 3.

Viewed from a further aspect, the present invention provides a composition comprising a polymeric scale inhibitor as hereinbefore defined. The composition additionally comprises a carrier.

Viewed from a still further aspect, the present invention provides a method of prepanng a polymeric scale inhibitor as hereinbefore defined comprising polymerising monomers in the presence of a boron-containing compound.

Viewed from a still further aspect, the present invention provides use of a polymer as hereinbefore defined as a scale inhibitor.

Viewed from a still further aspect, the present invention provides a method of treating or preventing scale in a water-containing system, comprising contacting said system with a polymeric scale inhibitor as hereinbefore defined.

Viewed from a still further aspect, the present invention provides a method of controlling and/or preventing scale in a water-containing system, comprising:
i) contacting said system with a Polymeric scale inhibitor as hereinbefore defined;
ii) collecting a sample of water from said water-containing system;
iii) assessing the boron content of said sample;
iv) using said assessed boron content to determine the amount of scale inhibitor present in said sample; and
v) optionally, contacting said system with further scale inhibitor.

Viewed from a still further aspect, the present invention provides a method of detecting a Polymeric scale inhibitor as hereinbefore defined in a sample taken from a water-containing system comprising:
i) assessing the boron content of said sample; and optionally
ii) using said assessed boron content to determine the amount of scale inhibitor present in said sample

Viewed from a still further aspect, the present invention provides a kit for determining the amount of scale inhibitor present in a water-containing system comprising:
i) a container comprising a polymeric scale inhibitor as hereinbefore defined; and
ii) a set of calibration samples of known concentration of said scale inhibitor.

### DETAILED DESCRIPTION OF INVENTION

As used herein the term "scale" is intended to encompass any precipitate which may be formed within a hydrocarbon (i.e. oil or gas) producing system. In hydrocarbon producing systems, typical examples of scale include sulphate and carbonate salts of group I and group II metals, e.g. BaSO₄, SrSO₄, CaSO₄ and CaCO₃. The scale inhibitors of the present Invention are particularly effective in inhibiting and/or preventing formation of scale comprising BaSO₄.

As used herein the term "scale inhibitor" is used to refer to a compound that prevents or reduces the deposition of scale on a surface.

The polymeric scale inhibitors of the present invention are labelled, marked or tagged with at least one boron atom. As used herein the terms "labelled", "marked" or "tagged" are used interchangeably to mean that a boron atom is incorporated into the structure of a scale inhibitor. The boron atom(s) may be incorporated into the scale inhibitor by any type of chemical bond, but at least some are covalently bonded to the scale inhibitor structure.

In the polymeric scale inhibitors of the present invention, the boron atom is present in a side chain comprising a group of formula (II): 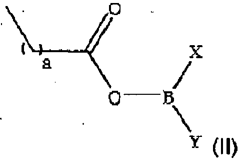 wherein X and Y are each independently R', OR' or OCOR' where R' is H or optionally, substituted organic radicals having from 1 to 20, more preferably 1 to 12, e.g. 1 to 6 carbon atoms and ȧ is 0 or an integer from 1 to 3.

Organic radicals include alkyl, cycloalkyl, alkenyl, cycloakenyl, aryl and combinations thereof (e.g. aralkyl), optionally including one or more heteroatoms (e.g. O, N, S, P, Si). Preferred organic radicals are alkyl and aryl. Particularly preferred alkyl groups comprise 1 to 6 carbon atoms or aryl groups comprising 6 to 12 carbon atoms.

Optional substituting groups include C₁₋₆ alkyl, C₂₋₆ alkenyl, C₆₋₁₈ aryl, halide, amine and protected amine Preferably, however, the organic radical is unsubstituted

Preferred groups of formula (II) are those wherein R' is a hydrogen atom or a substituted or unsubstituted, preferably unsubstituted, alkyl, alkenyl or aryl group. Particularly preferably, each R' is a hydrogen atom or an alkyl group, e.g. ethyl or methyl.

In preferred groups of formula (II), X and Y are non-bridging.

Particularly preferred groups of formula (II) are those wherein X and Y are each independently R' or OR'. Preferably at least one of X and Y is OR', e.g. OH. Still more preferably both of X and Y are OR'.

When X and/or Y is R' it is preferably hydrogen or alkyl (e.g. alkyl). When X and/or Y is OR', R' is preferably hydrogen or alkyl (e.g. hydrogen).

Although X and Y may be different, In preferred groups of formula (II), X and Y are the same.

An especially preferred group of formula (II) is:

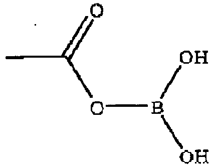

The boron atom(s) present within any given polymeric scale inhibitor of the present invention may be present as different groups but are preferably present as the same group.

In the scale inhibitors of the present invention, the boron atom(s) is present in a side chain of the polymeric inhibitor. By a side chain is meant a group that is appended to the main polymer backbone.

Polymeric scale inhibitors of the present invention may be homopolymers or interpolymers (e.g. copolymers or terpolymers). By a homopolymer is meant that the polymer consists essentially of monomeric units deriving from one type of monomer. Preferred homopolymers comprise at least 99% by weight, preferably at least 99.9% by weight of one type of monomer based on the total weight of the monomers. By an interpolymer is meant that the polymer comprises monomeric units deriving from two or more different types of monomer. In preferred interpolymers at least 1 % by weight, preferably at least 2 % by weight of each type of monomer is present based on the total weight of the monomers. A copolymer comprises two different monomers. A terpolymer comprises three different monomers. It is important to note in this respect that in this specification references to the number of different monomers present in a polymer is determined by the number of different starting monomers used in the polymerisation reaction, not by counting the number of different repeat units present in the polymer structure. As described below, the latter will be different from the number of different starting monomers used in the polymerisation due to the incorporation of boron tags into the polymer.

Polymeric scale inhibitors of the present invention preferably comprise (i.e. are formed from) at least two different monomers (i.e. at least 2 different monomers are added into the polymerisation). Preferred polymeric scale inhibitors comprise (e.g. are formed from) 2-8 different monomers, more preferably 2-6 different monomers, e.g. 2, 3. or 4 different monomers. Preferably the polymeric scale inhibitors for use in the Invention do not contain any non-ionic monomers

Particularly preferred Polymeric scale inhibitors of the present invention are terpolymers. Typical terpolymers of the present invention comprise at least 2 wt%, preferably at least 5 wt.%, more preferably at least 10 wt.%, e.g. at least 20 wt.% of each monomer relative to the total weight of monomers.

The polymeric scale inhibitors of the present invention preferably comprise (e.g. are formed from) a monomer comprising at least one carboxylate group, still more preferably a monomer comprising one carboxylate group or two carboxylate groups. By a carboxylate group is meant a group -COO-Z⁺ wherein Z is a counterion, preferably hydrogen or a metal atom (e.g. a group I or II metal atom): By the phrase "one carboxylate group" it is meant that only a single -COOZ group is present.

Polymeric scale inhibitors of the present invention preferably comprise (e.g. are formed from) at least one monomer of formula (III) or (IV): 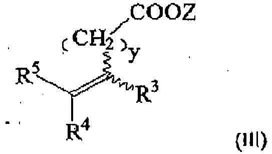 (wherein
Z is a counterion, preferably a hydrogen atom or a univalent metal atom (e.g. a hydrogen atom);
y is 0 or an integer from 1 to 3 (e.g. 1); and
R³, R⁴ and R⁵ are each independently hydrogen, an optionally substituted alkyl or aryl group having from 1 to 6 carbon atoms, -CO₂Z, -SO₃Z or -PO₃Z_{2:} 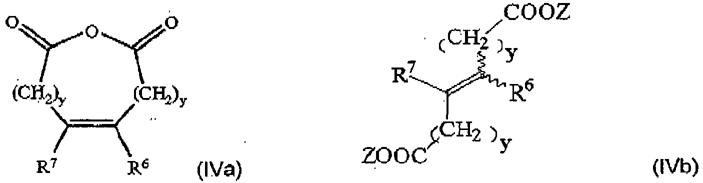 (wherein
Z is a counterion preferably a hydrogen atom or a univalent metal atom (preferably a hydrogen atom);
each y is independently 0 or an integer from 1 to 3 (e.g. 1); and
R⁶ and R⁷ are each independently hydrogen, an optionally substituted alkyl or aryl group having from 1 to 6 carbon atoms, -CO₂Z, -SO₃Z or -PO₃Z₂.

Preferred monomers of formula (III) are those wherein y is 0.

Preferred monomers of formula (III) are also those wherein R³ is hydrogen or an optionally substituted alkyl or aryl group having from 1 to 6 carbon atoms. More preferably R³ is a hydrogen atom or a substituted or unsubstituted, preferably unsubstituted, alkyl group. Particularly preferably R³ Is hydrogen or a C₁₋₃ alkyl group (e.g. methyl). Still more preferably R³ is hydrogen.

In further preferred monomers of formula (III), R⁴ and R⁵ are independently hydrogen, -CO₂Z, -SO₃Z, -PO₃Z₂ or an alkyl or aryl group (e.g. an aryl group) substituted with a -CO₂Z, -SO₃Z or -PO₃Z₂ group wherein Z is as hereinbefore defined. In still further preferred monomers of formula (III), R⁴ and R³ are independently hydrogen, -SO₃Z, -PO₃Z₂ or an alkyl or aryl group (e.g. an aryl group) substituted with a -SO₃Z or -PO₃Z₂ group wherein Z is as hereinbefore defined. Although R⁴ and R⁵ may be different, in preferred monomers of formula (III), R⁴ and R⁵ will be the same. Still more preferably R⁴ and R⁶ are both hydrogen atoms.

Preferred monomers of formula (III) may have a cis or trans configuration. Formula (III) is therefore not intended to represent any particular geometric arrangement.

Particularly preferred polymeric scale inhibitors of the present invention comprise (e.g. are formed from) a monomer selected from acrylic acid, methacrylic acid, crotonic acid and vinyl acetic acid. Acrylic acid is an especially preferred monomer. Such monomers are commercially available, e.g. from Aldrich Chemical Company Inc.

Polymeric scale inhibitors of the present invention may comprise one or more (e.g. 2 or 3, preferably 2) different monomers of formula (III). Preferred polymers comprise one type of monomer of formula (III).

Preferred monomers of formula (IV) are those wherein at least one y is 0. In still further preferred monomers, both y are 0.

Preferred monomers of formula (IV) are also those wherein R⁶ is hydrogen, an optionally substituted alkyl or aryl group having from 1 to 6 carbon atoms. More preferably R⁶ is a hydrogen atom or a substituted or unsubstituted, preferably unsubstituted, alkyl group. Particularly preferably R⁶ is hydrogen or a C₁₋₃ alkyl group (e.g. methyl). Still more preferably R⁶ is hydrogen.

In further preferred monomers of formula (IV), R⁷ is hydrogen, -CO₂Z, -SO₃Z, -PO₃Z₂ or an alkyl or aryl group (e.g. an aryl group) substituted with a -CO₂Z, - SO₃Z or -PO₃Z₂ group wherein Z is as hereinbefore defined. Still more preferably R⁷ is hydrogen.

Preferred monomers of formula (IV) are those of formula (IVb). Preferred monomers of formula (IVb) may have a cis or trans configuration. Formula (IVb) is therefore not intended to represent any particular geometric arrangement.

Particularly preferred polymeric scale inhibitors of the present invention comprise (e.g. are formed from) a monomer selected from fumaric acid, maleic acid, itaconic acid and maleic anhydride. Fumaric acid and maleic acid are especially preferred monomers. Such monomers are commercially available, e.g. from Aldrich Chemical Company Inc.

Polymeric scale inhibitors of the present invention may comprise (e.g. are formed from) one or more (e.g. 2 or 3, preferably 2) different monomers of formula (IV). Preferred polymeric scale inhibitors comprise (e.g. are formed from) one type of monomer of formula (IV).

Particularly preferred scale inhibitors of the invention comprise (e.g. are formed from) at least one monomer of formula (III) and at least one monomer of formula (IV).

Particularly preferred polymeric scale inhibitors of the present invention also comprise (e.g. are formed from) a monomer that is a diallyl ammonium salt. Diallyl ammonium salts suitable for incorporation into the polymeric scale inhibitors of the present invention include compounds of formula (V): 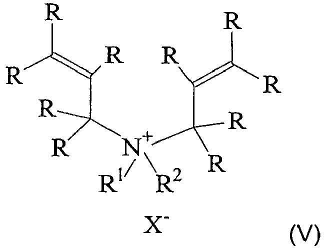 (wherein
R¹ and R² are each independently hydrogen or optionally substituted organic radicals having from 1 to 20 carbon atoms, preferably 1 to 12 carbon atoms, e.g. 1 to 6 carbon atoms;
each R is independently selected from hydrogen and organic radicals having from 1 to 20 carbon atoms, e.g. 1 to 6 carbon atoms; and
X is a counterion which may optionally be covalently bonded to either R¹ or R²).

Preferred monomers of formula (V) are those wherein each R is a hydrogen atom or a substituted or unsubstituted, preferably unsubstituted, alkyl, alkenyl or aryl group. Particularly preferably, each R is a hydrogen atom or an alkyl group (e.g. methyl or ethyl). Although each R may be different, in preferred monomers of formula (V) each R is the same. Still more preferably, each R is a hydrogen atom.

In formula (V), X is preferably sulfate, phosphate or a halide, especially chloride.

In particularly preferred monomers of formula (V), X is not covalently bonded to either R¹ or R² (i.e. it stands as a separate or free counterion). In these monomers, R¹ and R² are each independently a substituted or unsubstituted, preferably unsubstituted, alkyl, alkenyl or aryl group. Particularly preferably, R¹ and R² are each independently an alkyl group, especially an unsubstituted alkyl group. Preferred alkyl groups have from 1 to 8 carbon atoms, e.g. C₁₋₆. Representative examples of preferred alkyl groups include methyl; ethyl, propyl, butyl and pentyl. Methyl is particularly preferred. Although R¹ and R² may be different, in preferred monomers of formula (V), R¹ and R² are the same (e.g. R¹ and R² are both methyl).

In formula (V), X may be covalently linked either to R¹ or R². The structure of a monomer of this type in which X is linked to R² is shown below in formula (Va): 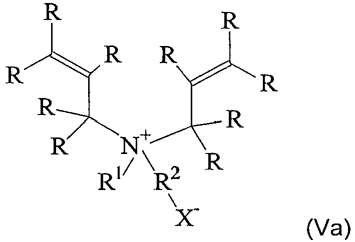 (wherein
R, R¹, R² and X are as hereinbefore defined).

In those monomers where X is covalently bonded to R¹ or R² (e.g. in monomers of formula (Va)), the R¹/R² group to which it is bound is preferably an unsubstituted, alkyl, alkenyl or aryl group. Particularly preferably, the R¹/R² group to which X is bound is an alkyl group (e.g. a C₁₋₆ alkyl group, more preferably a C₁₋₄ alkyl, group). Ethyl (-CH₃CH₂-) is particularly preferred. The remaining R¹/R² group (i.e. R² when X is bound to R¹ and vice versa) is preferably as defined above for R¹ and R² when X is not covalently bound to the monomer structure.

Polymers for use in the invention may comprise one or more (e.g. 2 or 3, preferably 2) different monomers of formula (V), Preferably, however, the polymers comprise one type of monomer of formula (V).

A particularly preferred polymeric scale inhibitor of the present invention comprises (e.g. is formed from) diallyldimethyl ammonium chloride (DADMAC). DADMAC is commercially available from Chengdu Cation Chemistry Company, China.

An especially preferred polymeric scale inhibitor of the present invention comprises (e.g. is formed from) at least one monomer of formula (III), at least one monomer of formula (IV) and at least one monomer of formula (V).

The boron tags present in the scale inhibitors of the present invention are preferably introduced during the polymerisation process. The boron-containing compound preferably reacts with at least one of the monomers hereinbefore defined to form a group of formula (II) as hereinbefore defined.

Still more preferably the boron-containing compound is a borane (e.g. compounds of, or containing, BR"₃), a borate (e.g. compounds of, or including, B(OR")₃), boronate (e.g. compounds of, or including, R"B(OR")₂) or borinate (e.g. compounds of, or including, R'₂B(OR'), wherein R" is an organic radical having from 1 to 20 carbon atoms. Preferably the boron-containing compound is a borate.

Representative examples of suitable borates include alkylborates (e.g., trimethylborate, triethylborate, tris(2-chloroethyl)borate, tris(2-aminoethyl)borate, tri(n-propyl)borate, triisppropylborate, tri(n-butyl)borate, triisobutylborate, tri(sec-butyl)borate, tri(t-butyl)borate, tri(n-pentyl)borate, trihexylborate, tris(4-methyl-2-pentyl)borate, tris(2-ethylhexyl)borate, trioctylborate, tris(1-methyheptyl)borate, tris(2-ethylhexyl)borate, tris(2,8-dimethyl-4-heptyl)borate, tris(diisopropylcarbinyl)borate, bis(diisobutylcarbinyl)borate, tris(3,5-dimethyl-4-heptyl)borate, tridecylborate, tridodecylborate, trioctadecylborate, tris(2-dimethylaminoethyl)borate); cycloalkylborates (e.g., tricyclohexylborate, tri(2-cyclohexylcyclohexyl)borate, di(n-butyl)[2,6-di(t-butyl)-4-methylphenyl]borate); (alkyl)arylborates (e.g., triphenylborate, tri(o-tolyl)borate, tri(m,p-cresyl)borate, tri(o-chlorophenyl)borate, tri(nonylphenyl)borate, dihydrogen nonylphenyl borate); alkenylborates (e.g., triallylborate); cyclic esters of boric acid (e.g., glycerol borate, triethylamine glycerol borate, monoethanolamine glycerol borate, triethanolamine borate (boratran), tripropanolamine borate, triisopropanolamine borate, and those formed form alkanolamines, alkane polyols, and cycloalkane polyols, such as propane- 1,3-diol, phenyl ethane-1,2-diol, ethyl-2,4-dimethylpentane-2,4-diol, and 2-ethyl-2-hydroxymethyl-1,3-propane diol); inorganic borates (e.g., sodium tetraborate, lithium tetraborate); and adducts of amines (e.g., tertiary alkyl primary amines) with borates (e.g., boro-tetra-n-propylate, tri(n-propyl)borate).

Particularly preferably the boron-containing compound is an inorganic borate. Especially preferably the boron-containing compound is an alkali metal tetraborate salt, e.g. sodium tetraborate (borax); potassium tetraborate or lithium tetraborate. Use of borax as the boron-containing compound is especially preferred.

The polymeric scale inhibitors for use in the invention may be prepared by any conventional polymerisation procedure known in the art (e.g. bulk polymerisation, solution polymerisation or suspension polymerisation). The above-described boron-containing compound is introduced during the polymerisation reaction. The boron-containing compound may be added to the polymerisation at any stage. Preferably, however, the boron-containing compound is added to the polymerisation after all of the monomers have been Introduced.

Solution polymerisation is generally preferred. Those skilled in the art will be aware of suitable reaction conditions as well as appropriate catalysts, polymerisation initiators and chain transfer agents. Preferred polymers of the invention include those obtainable by polymerisation. (e.g. by solution polymerisation) of at least one monomer comprising one carboxylate group (e.g. a monomer of formula (III)), at least one monomer comprising at least two carboxylate groups or an anhyride group (e.g. a monomer of formula (IV)) and optionally at least one monomer of formula (V) in the presence of a boron-containing compound. Preferred polymers are those obtainable by polymerisation of monomers of formulae (III), (IV) and (V) in a molar ratio of 1:1:1 to 20:100:20, more preferably about (1-10):(1-100):(1-5), e.g. about 1:(1-100):1. The amount of boron-containing compound to monomers of formula (III) and/or (IV) introduced into the polymerisation Is preferably in the range 1:5 to 1:30, more preferably 1:10 to 1:20 based on weight. Preferably any carboxylic acid groups present in the monomers undergo reaction with boron-containing compound.

Polymerisation is preferably carried out in solution. Still more preferably the polymerisation is carried out in water. The pH of the polymerisation medium is preferably 4 to 7, still more preferably 5 to 6.5. If necessary the pH of the medium can be adjusted by addition of a neutralising solution (e.g. NaOH (aq.)).

An initiator will typically be used to start polymerisation. Any water soluble initiator can be employed for this purpose, e.g. hydrogen peroxide, dialkyl peroxides, persulfates and azo compounds. Sodium persulfate is a preferred initiator. Initiators are generally used in an amount of 0.1-10 % wt of the total weight of monomers, more preferably 0.5-5 %wt of the total weight of monomers, e.g. about 1-2 % wt of the total weight of monomers.

In a preferred polymerisation method, a chain transfer agent is also used. Any conventional chain transfer agent may be utilised although hypophosphorus acid and salts thereof are preferred. Chain transfer agents are typically used in an amount of 1-20 %wt of the total weight of monomers, more preferably 2-10 % wt of the total weight of monomers.

The polymerisation reaction will typically be carried out at a temperature of 50 to 120 °C, preferably 80 to 110 °C, e.g. about 100 °C. Generally polymerisation occurs for 1 to 4 hours, e.g. about 2 to 3 hours.

Thus, in a typical polymerisation method, monomers (e.g. DADMAC, acrylic acid and fumaric acid or maleic acid) and a boron-containing compound (e.g. Borax) are dissolved in water and heated to 50-100 °C. A neutralising solution (e.g. NaOH solution) is then optionally added (e.g. if acidic monomers are employed). Initiator and chain transfer agent, both dissolved in water, are added and the temperature is increased until reflux occurs. Generally polymerisation will occur for about 2 hours. The polymer may then be isolated by conventional techniques.

The boron-containing compound introduced into the polymerisation reaction preferably reacts with carboxylate groups present in the monomers to form groups of formula (II) as hereinbefore defined. Thus preferred scale inhibitors of the present invention comprise at least one repeat unit of formula (VI): 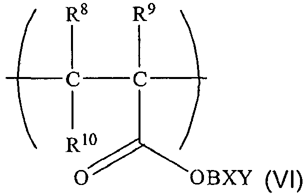 wherein X and Y are as hereinbefore defined; and
R⁸, R⁹ and R¹⁰ are each independently hydrogen, an optionally substituted alkyl or aryl group having from 1 to 6 carbon atoms, -CO₂BXY, -CO₂Z, -SO₃Z or -PO₃Z₂.

In preferred repeat units of formula (VI) R⁹ and R¹⁰ are each independently hydrogen, -SO₃Z, -PO₃Z₂ or an alkyl or aryl group (e.g. an aryl group) substituted with a -SO₃Z or -PO₃Z₂ group wherein Z is as hereinbefore defined. Although R⁹ and R¹⁰ may be different, in preferred repeat units of formula (VI), R⁹ and R¹⁰ will be the same. Still more preferably R⁹ and R¹⁰ are hydrogen atoms.

In further preferred repeat units of formula (VI) R⁸ is -(CH₂)ₐC(O)OBXY (i.e. a group of formula (II) as hereinbefore defined), hydrogen or an alkyl or aryl group (e.g. an aryl group) substituted with a -SO₃Z or -PO₃Z₂ group wherein Z is as hereinbefore defined. Still more preferably R⁸ is -(CH₂)ₐC(O)OBXY (i.e. a group of formula (II) as hereinbefore defined) or hydrogen.

Particularly preferred homopolymeric scale inhibitors of the present invention comprise repeat units of the formula (VII): 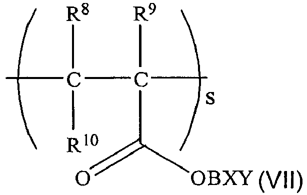 wherein R⁸, R⁹, R¹⁰, X and Y are as hereinbefore defined and s is an integer from 3-4500, preferably 10-3000.

Particularly preferred copolymeric scale inhibitors of the present invention comprise repeat units of the formula (VIII): 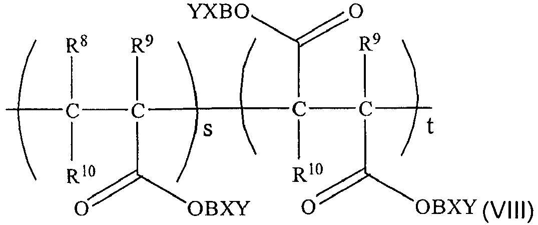 wherein R⁸, R⁹, R¹⁰, X and Y are as hereinbefore defined, s is an integer from 3-3000 and t is an integer from 1-2500.

Particularly preferred terpolymeric scale inhibitors of the present invention comprise repeating units represented by formula (IX) and/or formula (X): 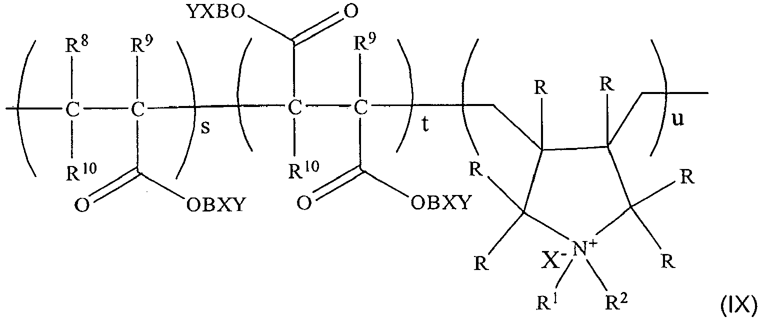 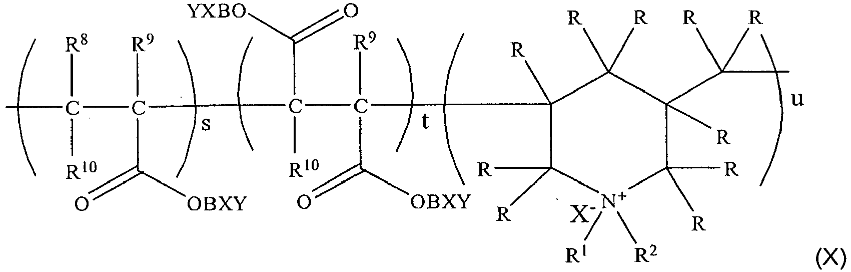 (wherein R⁸, R⁹, R¹⁰, R¹, R², R, X and Y are as hereinbefore defined, s is an integer from 3-3000, t is an integer from 1-2500 and u is an integer from 1-3000.

In the polymers herein described the repeat units deriving from monomers of formulae (III), (IV) and (V) may be distributed randomly along the length of the polymer chain (i.e. the polymer may be a random polymer). Alternatively the polymer may be a block or alternating polymer. Preferred polymers for use in the invention are random polymers. Formulae (VIII)-(X) are not, however, intended to represent any particular polymer. Rather, in formulae (VIII), (IX) and (X), "s", "t" and "u" are simply intended to denote the total number of each repeat unit deriving from monomers of formulae (III), (IV) and (V) in the polymer chain, respectively (i.e. they do not represent the way in which the monomers are distributed throughout the polymer). Moreover formulae (VIII)-(X) are also not intended to represent any particular geometric configuration of the repeat unit deriving from the monomers of formulae (III) and/or (IV) (e.g. the -COOZ groups may be present on the same side of the polymer chain or on different sides).

During polymerisation of the monomers of formula (V) described herein various different bonds may form via intermolecular and intramolecular mechanisms giving rise to the five and six membered rings shown in formulae (IX) and (X). These reactions are described in more detail in WO2007/080417, the entire contents of which are incorporated herein by reference.

Preferably the polymeric scale inhibitors of the present invention are substantially linear. For example, it is preferred that less than 10 %, more preferably less than 5 % cross linking is present. Still more preferably the polymeric scale inhibitors of the present invention are water-soluble.

The weight average molecular weight of the polymeric scale inhibitors of the present invention is preferably in the range 500 to 500,000 more preferably 1,000 to 100,000, still more preferably 1,500 to 50,000, e.g. 2000 to 10000. Weight average molecular weight may be determined by any conventional technique, e.g. by gel permeation chromatography.

The boron content of the polymeric scale inhibitors of the present invention is preferably in the range 500-500000 ppm wt boron based on the total weight of the polymer, more preferably 1000-10000 ppm wt boron based on the total weight of the polymer, still more preferably 1500-3000 ppm wt boron based on the total weight of the polymer. The minimum amount of boron present is preferably about 50 ppm based on the total weight of the polymer.

Preferred polymeric scale inhibitors of the invention are also those with one or more inorganic end groups. By an "end group" is meant a non-monomeric group which is located at an end of the polymer chain and is covalently attached to the monomer adjacent thereto. Representative examples of preferred inorganic end groups include - SO₄H, -SO₃H, -H₂PO₃, -H₂PO₄ and salts thereof. Further preferred end groups include anionic derivatives of the afore-mentioned groups (e.g. -SO₄⁻, -SO₃⁻ -HPO₃⁻ and -HPO₄⁻), These end groups may be incorporated into the polymer during polymerisation from a chain transfer agent and/or initiator. Groups containing phosphorous are particularly preferred (e.g. -H₂PO₃, -H₂PO₄, -HPO₃⁻, -HPO₄⁻).

The tagged polymeric scale inhibitors of the present invention are preferably applied as a solution or dispersion (e.g. a solution) in a liquid carrier. The liquid carrier may be aqueous or non-aqueous. Suitable non-aqueous carriers include alkanols, particularly polyols (e.g. a glycol). Particularly preferred glycols include those of the formula (CH₂)ₙ(OH)₂ wherein n is 2 to 6 (e.g. ethylene glycol). Still more preferably the liquid carrier is aqueous (e.g. sea water).

When the liquid carrier is aqueous, it is preferred that the solution or dispersion of inhibitor in carrier liquid has a pH less than 7. Preferably the pH of polymer solution/dispersion is 1 to 6, more preferably 2 to 5, e.g. about 3 to 4.

The concentration of the inhibitor in the carrier liquid will be an amount effective to inhibit scale formation and will be readily determined by those skilled in the art. Typically, however, the inhibitor will be present in the liquid carrier at a concentration of 0.05 to 50 %wt, preferably 0.1 to 30 %wt, more preferably 1 to 20 %wt, e.g. about 5 to 10 %wt or 6 to 15 %wt. Such carrier liquids may provide an inhibitor concentration in the fluids present in a water containing system (e.g. a hydrocarbon producing system) of at least 5 ppm (by volume), preferably 20 ppm (by volume). Representative examples of inhibitor concentrations in the fluids of a water-containing system are 1 to 10,000 ppm (by volume), more preferably 10 to 5000 ppm (by volume), still more preferably 20 to 1000 ppm (by volume, e.g. about 50 ppm (by volume).

The liquid carrier may also contain other additives known in the art for use in scale treatment. Such additives include surfactants, bridging agents, thickeners, corrosion inhibitors, pH buffers, catalysts and other scale inhibitors. The most suitable other additives depend on the water containing system to be treated.

The amount of treatment composition to be used to inhibit scale formation will vary widely depending on factors such as the nature of the polymer used, the nature of the water containing system, the nature of the scale (e.g. the levels of Ba, Sr and Ca present) and so on. The appropriate amount of tagged polymeric scale inhibitor will be readily determined by those skilled in the art. The scale inhibitors and compositions hereinbefore described are particularly useful in the treatment of hydrocarbon producing systems. This is because hydrocarbon producing systems are "open"(i.e. the scale inhibitor can escape therefrom) and it is necessary to replenish the scale inhibitor at various points in time. The tagged scale inhibitors of the present invention are, however, also useful in the treatment of other water-containing systems. Examples of such systems include heat-exchanger systems (e.g. boiler systems, water cooling systems), desalination systems and gas scrubbers. Although such systems are normally regarded as "closed", it is not unusual for scale inhibitor to be able to leak, or be drained, from the system. It is therefore useful to be able to readily determine the amount of scale inhibitor present in such systems.

Treatment of such water-containing systems by the methods of the present invention may be conducted according to any techniques conventional in the art.

The tagged polymeric scale inhibitors of the present invention are, however, particularly useful in the treatment of hydrocarbon wells, especially in squeeze treatments thereof. This is because the use of scale inhibitors in squeeze treatment means that they often have very low operating concentrations. As a result additional treatments are not required until the amount of scale inhibitor is very low, e.g. 1-50 ppm. Accurate and reliable methods of determining such low amounts of scale inhibitor, particularly in the presence of other brine ions, are therefore important. An advantage of the tagged scale inhibitors of the present invention is that this is easily and readily achieved.

When used in a hydrocarbon producing system, the scale inhibitors of the invention may be used at any stage, e.g. before and/or after hydrocarbon production. The scale inhibitors may also be used in conjunction with other treatments. Treatment according to the invention may also be repeated as many times as necessary.

Treatment according to the methods of the present invention may be conducted according to any techniques conventional in the art and any convenient equipment may be used to supply the treatment composition to the hydrocarbon well. For instance, bull heading or coil tubing may be used. Thus the treatment composition may be introduced into a well bore by, for example, injection under pressures sufficient to penetrate the formation and the equipment present therein.

Although the scale inhibitor of the invention may be introduced into a hydrocarbon producing system (e.g. a subterranean formation) without any pre-flush, it is preferred to treat the formation with a pre-flush composition prior to treatment with the polymeric scale inhibitors described herein. The purpose of the pre-flush may be, for example, to wet the surface of the formation (e.g. if the formation is oil-rich) to aid retention of the inhibitors described herein. The pre-flush composition may therefore include a surfactant.

An after-flush or over-flush composition may also be optionally used. An after-flush is typically done following addition of the inhibitor described herein. It serves to displace any inhibitor which has not absorbed onto the surface of the formation out of the well bore. Any convenient aqueous or non-aqueous, preferably aqueous, liquid may be used.

Treatment times or periods of shut in will depend on a number of factors including the nature of the inhibitor used, the nature of the formation and the level of scaling which would otherwise occur. Typical shut in times may be readily determined by those skilled in the art and will generally be in the range from 0.5 to 24 hours, preferably 1 to 16 hours, e.g. about 8 to 12 hours.

The amount of tagged scale inhibitor of the present invention in a sample taken from a water-containing system may be determined by assessing its boron content. As used herein the term "assessing" means that a qualitative or quantitative value, preferably quantitative value, for the concentration of scale inhibitor is determined. This may be the value for the concentration of the sample taken from the water-containing system or may be the value for the concentration of the sample as tested, e.g. after concentration by dialysis. In the latter case, the value for the sample taken from the water-containing system can easily be calculated therefrom. The method may therefore involve the additional step of converting the amount of scale inhibitor assessed into scale inhibitor concentration.

In the methods of the invention the boron-content of a water-containing system may be monitored periodically or continuously. Preferably, however, the boron-content is monitored periodically. The skilled man in the art will readily be able to determine appropriate monitoring intervals.

The assessment of the boron-content of a sample may be carried out using any conventional procedure known in the art for boron determination, but it is preferably achieved using inductively coupled plasma (ICP) optical emission spectroscopy (ICP-OES), ICP-mass spectroscopy (ICP-MS) or ICP-chromatography (e.g. HPLC or size exclusion chromatography). Preferably ICP-MS or ICP-OES is used.

ICP-MS makes use of the fact that the plasma breaks apart the molecules present in a sample and ionises the elements present therein. The resulting ions are then separated on the basis of their mass-to-charge ratio in the mass spectrometer and measured by a detector. A quantitative analysis can be achieved by comparing the counts measured for a sample with an external calibration curve generated for the same element, in this case boron.

Use of ICP-MS in the methods of the present invention has the following advantages:
- Low detection limit in the range 0.1-1 ppb (wt)
- Ability to handle both simple and complex samples
- High productivity, e.g. many samples can be analysed in a short time.

ICP-OES makes use of the fact that the atoms of elements can take up energy from an inductively coupled plasma, are thereby excited, and fall back into their ground state again emitting a characteristic radiation. The identification of this radiation permits the qualitative analysis of a sample. A quantitative determination takes place on the basis of the proportionality of radiation intensity and element concentration in calibration and analysis samples.

In a typical ICP-OES analysis; the liquid sample is introduced into the inductively generated argon plasma through a nebulizer system and excited. The spectrum emitted is transferred into a spectrometer where it is decomposed into the individual wavelengths and evaluated. The intensities of the spectral lines are measured by CID semiconductor detectors. Calibration is effected with multi-element solutions mixed from standard solutions.

Use of ICP-OES in the methods of the present invention has the following advantages:
- Wide determinable concentration range from a few µg/l up to 2 % in solution
- Precision: 1 - 3 % for major elements, ± 10-30 % for traces
- Measurement times of generally a few minutes per sample

Optionally ICP-OES or ICP-MS can be combined with chromatography. In such methods, chromatography is used to separate the agents present in the sample taken from the water-containing system and ICP-OES or ICP-MS is used to assess the amount of separated scale inhibitor by determining its boron-content. Any type of conventional chromatography may be used for this purpose, e.g. HPLC, size exclusion chromatography etc. Preferably, however, ICP-OES or ICP-MS is used directly without any need for chromatography.

Indeed an advantage of the inhibitors and methods of the present invention is that little, if any, sample preparation is required prior to carrying out an assessment of boron concentration. Thus in many cases the sample of water from the water-containing system can be directly analysed by the methods of the invention without carrying out any treatment, e.g. purification or clean up steps.

The sample taken from the water-containing system may, however, be filtered prior to assessing its boron content. This step is not necessary to the method *per se*, but may prevent damage occurring to the equipment used to carry out, e.g. ICP-OES or ICP-MS analysis and thus increase its useable life time. Filtration may be carried out using conventional syringe filters, e.g. 0.45 µm syringe filters available from Whatman.

Additionally the sample taken from the water-containing system may optionally be concentrated (e.g. by dialysis). Dialysis is preferred when the concentration of inhibitor in the sample is very low, e.g. <10 ppm. Dialysis may be carried out according to any conventional procedure known in the art, e.g. using a "slide-a-lyzer" cartridge commercially available from Perbio.

In general, in addition to the sample of water-containing system under evaluation, calibration samples with known scale inhibitor concentrations will also be assessed in the method hereinbefore described. Such determinations can be used to plot a calibration curve from which the amount of inhibitor in the sample under evaluation can be determined. The typical concentration of inhibitor in a water-containing system is 0-200 ppm. Thus calibration samples preferably have inhibitor concentrations of up to 500 ppm (e.g. 1, 2, 5, 10, 15, 20, 50, 100, 150, 175, 200 and 250 ppm). Methods of the invention may therefore comprise an additional step of using the assessed boron content to determine the amount of scale inhibitor present in the sample. Methods may also comprise the additional step of adjusting the concentration of tagged scale inhibitor in the water-containing system, e.g. by adding further scale inhibitor.

The methods of the invention are particularly useful for the determination of the amount of inhibitor in produced fluid from a hydrocarbon well. By the term "produced fluid" is meant the fluid obtained from the hydrocarbon well during production. The produced fluid typically comprises hydrocarbon as well as an aqueous phase. The methods of the invention are particularly useful for determining the amount of inhibitor present in the aqueous phase of produced fluid.

The invention will now be described by way of the following non-limiting Examples and Figures wherein:
Figure 1 shows the ¹¹B NMR spectrum for a boron-tagged polymeric scale inhibitor;
Figure 2 is a schematic of the test apparatus used to determine scale inhibiting performance; and
Figure 3 shows the results of dynamic loop testing using a boron-tagged polymer of the present invention.

### EXAMPLES

### Preparation of Boron-tagged polymeric scale inhibitor

A boron tagged terpolymer of fumaric acid, acrylic acid and DADMAC was prepared in a 2 M³ reactor, equipped with a mechanical stirrer, a condenser, a thermometer and inlets.

### Procedure A

The following materials were used:

| | |
|---|---|
| Acrylic acid | 350 kg |
| Fumaric acid | 30 kg |
| DADMAC (60% in water) | 40 kg |
| Borax | 25 kg |
| Sodium hypophosphite | 20 kg (in 40 kg deionised water) |
| Sodium persulfate | 1.8 kg (in 6 kg deionised water) |
| NaOH | 70kg (in 114 kg deionised water) |

1100 kg deionised water was added to the reactor and it was heated to 60 °C. The monomers (i.e. acrylic acid, fumaric acid and DADMAC) were then added and the solution stirred. 25 kg of borax was added. NaOH was added to neutralize the reaction mixture and the initiator (sodium persulfate) and chain transfer agent (sodium hypophosphite) were added to induce polymerisation. The reaction mixture was then heated to reflux and stirred for 2 hours. The resulting terpolymer was then isolated.

### Procedure B

The boron-tagged polymeric scale inhibitor may alternatively be prepared using NaHSO₃ (sodium bisulfite) as chain transfer agent. The method is the same as the one described above except the water is heated to a temperature of 85 °C and the sodium persulfate and sodium bisulfite are used in a ratio of 12:1 by weight.

### ¹¹B Nuclear Magnetic Resonance Analysis

¹¹B NMR analysis was carried out on the boron-tagged polymer prepared according to procedure A to confirm the formation of a -C-O-B connection. The ¹¹B NMR analysis was carried out as follows:

To 4000 µl of sample, 1000 µl of D₂O was added in a 10 mm NMR tube. ¹¹B NMR was carried out referenced to an external standard (15 % BF₃.Et₂O in CDCl₃) and acquired using broadband decoupling (1024 transients, no delay time).

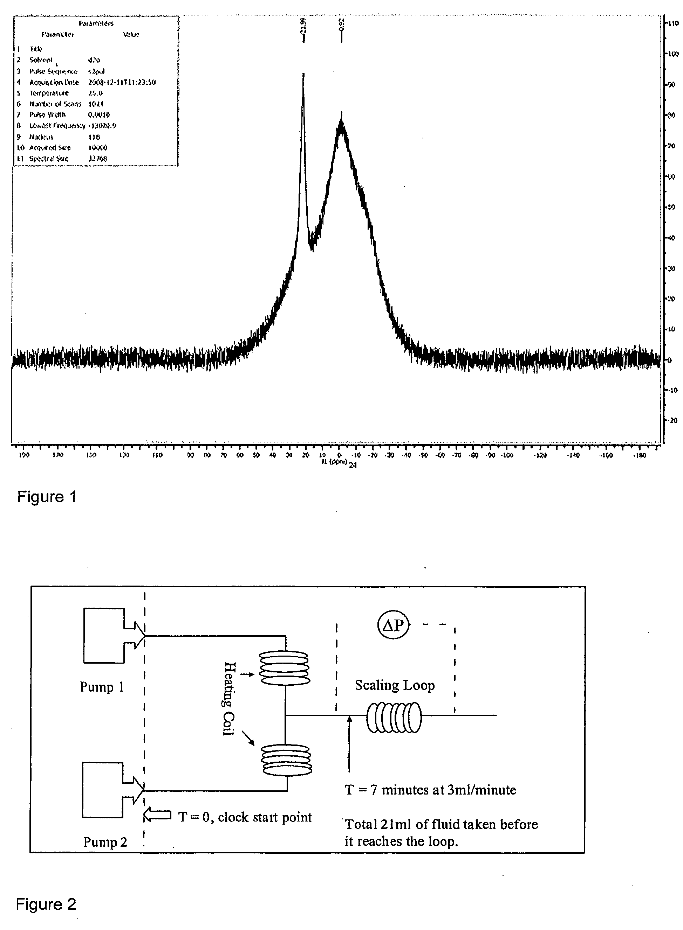

The ¹¹B NMR spectrum is shown in Figure 1. It contains one rather narrow boron signal at approximate 22 ppm, indicating the boron is presented as -C-O-B bonds.

### Use of boron-tagged polymer as a scale inhibitor

To evaluate the performance of the above-described tagged polymer in controlling scale deposition, dynamic loop tests were conducted. The brines used in the tests are synthetic Heidrun Tilje formation water and seawater brine made from dissolved salts with the composition given in Table 1 below.

**Table 1 Water Chemistry Used in the Tests**

| Composition mg/l | Heidrun Formation Water | Sea water |
|---|---|---|
| Na⁺ | 19510 | 11150 |
| K⁺ | 545 | 420 |
| Ca²⁺ | 1020 | 428 |
| Ma²⁺ | 265 | 1410 |
| Ba²⁺ | 255 | 0 |
| Sr²⁺ | 145 | 0 |
| SO₄²⁻ | 0 | 2800 |
| Cl⁻ | 33190 | 20310 |

The dynamic scale inhibitor performance test was designed to evaluate the ability of the tagged polymeric inhibitor to delay the nucleation and growth of scale on a pre-scaled metal surface. All tests were performed with mixed brines at 50:50 formation water and seawater (see Table 1). The test conditions were designed to represent the worst case of barium sulphate scaling conditions.

A schematic view of the test apparatus used to carry out dynamic loop testing is shown in Figure 2. In the tests, the formation water and seawater were separated into non scaling cation and anion brine fractions, such that on mixing the anion and cation brine fractions, the mixed brine would be representative of 50:50 mixed formation and sea water. The net mixing replicates the mixing of sea water with formation water. The barium is present in the cation brine and sulphate is present in anion brine. Two brines were pumped into the heating coil separately using two pumps. This ensured the fluids reached the test temperature before they mix in the loop. After passing the heating coil, the cation and anion brine were then mixed at the T-junction of the Inlet of the scale loop. The formation of scale within the scale loop can be tracked by measuring the differential pressure changes across the loop as a function of time. Scale inhibitors are designed to prevent the adhesion and growth of scale within the scale loop and thus prevent the increase in differential pressure at a particular concentration. This is termed the minimum inhibitor concentration (MIC).

The transport tire for the anion and cation brines prior to mixing is 7 minutes at a pump rate of 3 ml/minute. This represents a dead volume at 21 ml of total fluid, pumped by both pumps.

The test conditions were set as below:

| | |
|---|---|
| Temperature: | 86°C |
| Ambient pH of mixed brine: | 6.5 ± 0.3 (adjusted with 0.1 M NaOH) |
| Coil length: | 1 m |
| Coil internal diameter: | ~0.9 mm |
| Flow rate: | 10 ml/min |
| Pre-scale: | no |

Following each test, the loop was cleaned with 50 ml scale dissolver (DTPA), 50 ml de-ionised (DI) water, 50ml 1% acetic acid solution then DI water until the pH=7 ± 1.

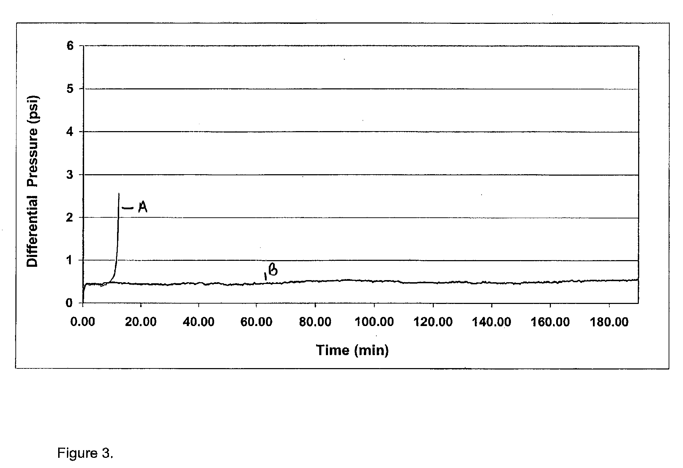

Figure 3 shows the experimental loop results from the dynamic loop tests using the boron tagged terpolymer prepared above. The plots show the differential pressure measured vs. the time. The line labelled A represents the test without the scale inhibitor where the scale quickly built up inside the coil, resulting in a steep increase of the differential pressure. The line labelled B represents the test where 40 ppm of boron tagged scale inhibitor was added in the mixed brine. The differential pressure increase was effectively prevented due to the presence of the scale inhibitor. The dynamic loop result therefore clearly shows that when the boron tagged inhibitor concentration was at 40 ppm, the barium sulfate scale precipitation was well controlled, resulting in a stable differential pressure reading.

The dynamic loop tests therefore demonstrated that the boron-tagged polymers are scale inhibitors. Under the given conditions where the barium concentration is as high as 285 ppm, the scale inhibitor can control the barium sulphate precipitation in the dynamic loop at 40 ppm at 3 hours test interval.

### Detection of boron-tagged polymeric scale inhibitor

The boron tagged scale inhibitor produced above by procedure A was detected using ICP-MS (with borate as the calibrant), using HPLC-ICP-MS and using size exclusion chromatography-ICP-MS.

Reverse Phase HPLC-ICP-MS was conducted using 3 % MeOH + 0.1 % formic acid in H₂O with an ACE® C18 column.

Size exclusion chromatography was conducted using 0.1 % formic acid in H₂O with a TSK 2000 SW column.
Sample preparation: Dilution with water 1:250
Total Boron in g /L as determined by ICP-MS

| mean | SD | RSD |
|---|---|---|
| 1.8 | 0.0 | 2.5 |

RP-HPLC-ICPMS
Boron: 1 peak at retention time of borate
Column recovery 95 ± 1 % of total B
SEC-ICPMS
Boron: 1 peak at retention time of borate
Column recovery 95 ± 4 % of total B

## Claims

1. A polymeric scale inhibitor, wherein said inhibitor comprises at least one boron atom present in a side chain comprising a group of formula (II): 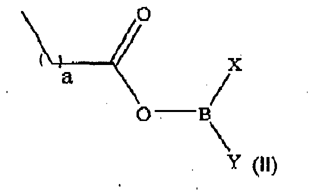 wherein X and Y are each independently R' OR' or OCOR', where R' is H or optionally substituted organic radicals having from 1 to 20 carbon atoms; and
a is 0 or an integer from 1 to 3.

2. An inhibitor as claimed in claim 1, wherein X and Y are non-bridging.

3. An inhibitor as claimed in claim 1 or 2, wherein both of X and Y is OH.

4. An inhibitor as claimed in any preceding claim, wherein said inhibitor comprises at least one monomer of formula (III) or (IV): 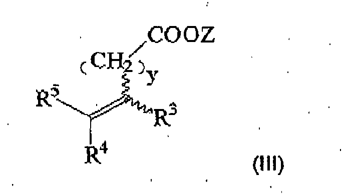 (wherein
Z is a counterion,;
y is 0 or an integer from 1 to 3 ; and
R³, R⁴ and R⁵ are each independently hydrogen, an optionally substituted alkyl or aryl group having from 1 to 6 carbon atoms, -CO₂Z, -SO₃Z or -PO₃Z₂); 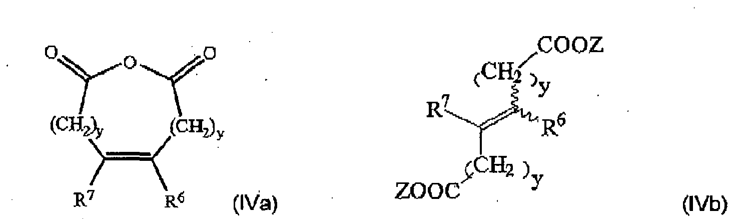 (wherein
Z is a counterion;
each y is independently 0 or an integer from 1 to 3; and
R⁶ and R⁷ are each independently hydrogen, an optionally substituted alkyl or aryl group having from 1 to 6 carbon atoms, -CO₂Z, -SO₃Z or -PO₃Z₂).

5. An inhibitor as claimed in any preceding claim, wherein said inhibitor comprises a monomer of formula (V): 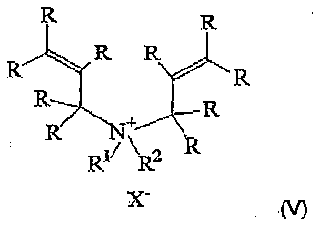 (wherein
R¹ and R² are each independently hydrogen or optionally substituted organic radicals having from 1 to 20 carbon atoms;
each R is independently selected from hydrogen and organic radicals having from 1 to 20 carbon atoms; and
X is a counterion which may optionally be covalently bonded to either R¹ or R²).

6. An inhibitor as claimed in any preceding claim comprising at least one repeat unit of the formula (VI): 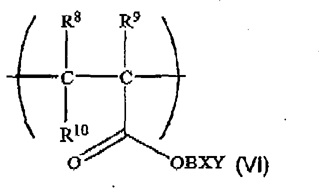 wherein X and Y are as defined above in any one of claims 1-3; and
R⁶, R⁹ and R¹⁰ are each independently hydrogen, an optionally substituted alkyl or aryl group having from 1 to 6 carbon atoms, -CO₂BXY, -CO₂Z, -SO₃Z or -PO₃Z₂.

7. An inhibitor as claimed in any one of claims 1 to 6, comprising 500-500,000 ppm wt boron based on the total weight of the polymer.

8. A composition comprising a polymeric scale inhibitor as defined in any one of claims 1 to 7 and a carrier.

9. A method of preparing a polymeric scale inhibitor as defined in any one of claims 1 to 7 comprising polymerising monomers in the presence of a boron-containing compound.

10. A method as claimed in claim 9, wherein said boron-containing compound is an inorganic borate.

11. Use of a polymer as defined in any one of claims 1 to 7 as a scale inhibitor.

12. A method of treating or preventing scale in a water-containing system, comprising contacting said system with a polymeric scale inhibitor as defined in any one of claims 1 to 7.

13. A method of controlling and/or preventing scale in a water-containing system as claimed in claim 12, further comprising:
i) contacting said system with a polymeric scale inhibitor as defined in any one of claims 1 to 7;
ii) collecting a sample of water from said water-containing system;
iii) assessing the boron content of said sample;
iv) using said assessed boron content to determine the amount of scale inhibitor present in said sample; and
v) optionally, contacting said system with further scale inhibitor.

14. A method of detecting a polymeric scale inhibitor as defined in any one of claims 1 to 7 in a sample taken from a water-containing system comprising:
i) assessing the boron Content of said sample; and
ii) using said assessed boron content to determine the amount of scale inhibitor present in said sample

15. A method as claimed in any one of claims 12 to 14, wherein said water-containing system is a heat-exchanger system, desalination system, gas scrubber or a hydrocarbon well, preferably a hydrocarbon well.

16. A method as claimed in claim 13 or claim 14, wherein said water-containing system is a hydrocarbon well and said sample is obtained from produced fluid.

17. A kit for determining the amount of scale inhibitor present in a water-containing system comprising:
i) a container comprising a polymeric scale inhibitor as defined in any one of claims 1 to 7; and
ii) a set of calibration samples of known concentration of said scale inhibitor.

## Patentansprüche

1. Polymerer Kesselsteinhemmer, wobei der Hemmer mindestens ein Boratom umfasst, das in einer Seitenkette vorliegt, die eine Gruppe der Formel (II) umfasst: 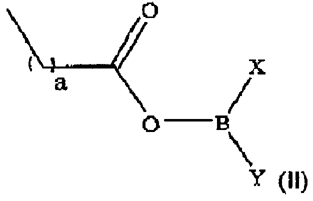 wobei X und Y jeweils unabhängig R', OR' oder OCOR' sind, wobei R' H oder wahlweise substituierte organische Radikale ist, die 1 bis 20 Kohlenstoffatome aufweisen; und a 0 beträgt oder eine ganze Zahl von 1 bis 3 ist.

2. Hemmer nach Anspruch 1, wobei X und Y nicht brückenbildend sind.

3. Hemmer nach Anspruch 1 oder 2, wobei sowohl X als auch Y OH sind.

4. Hemmer nach einem der vorhergehenden Ansprüche, wobei der Hemmer mindestens ein Monomer der Formel (III) oder (IV) umfasst: 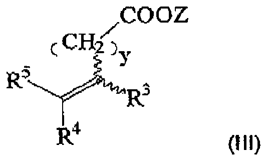 (wobei
Z ein Gegenion ist;
y 0 beträgt oder eine ganze Zahl von 1 bis 3 ist; und
R³, R⁴ und R⁵ jeweils unabhängig Wasserstoff, eine wahlweise substituierte Alkyl-oder Arylgruppe, die 1 bis 6 Kohlenstoffatome aufweist, -CO₂Z, -SO₃Z oder -PO₃Z₂ sind); 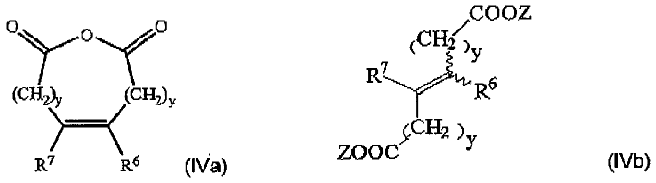 (wobei
Z ein Gegenion ist;
jedes y unabhängig 0 beträgt oder eine ganze Zahl von 1 bis 3 ist; und
R⁶ und R⁷ jeweils unabhängig Wasserstoff, eine wahlweise substituierte Alkyl-oder Arylgruppe, die 1 bis 6 Kohlenstoffatome aufweist, -CO₂Z, -SO₃Z oder -PO₃Z₂ sind).

5. Hemmer nach einem der vorhergehenden Ansprüche, wobei der Hemmer ein Monomer der Formel (V) umfasst: 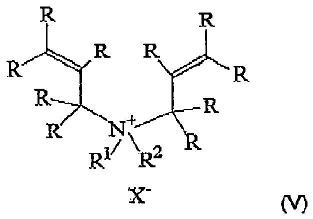 (wobei
R¹ und R² jeweils unabhängig Wasserstoff oder wahlweise substituierte organische Radikale, die 1 bis 20 Kohlenstoffatome aufweisen, sind;
jedes R unabhängig unter Wasserstoff und organischen Radikalen ausgewählt ist, die 1 bis 20 Kohlenstoffatome aufweisen; und
X ein Gegenion ist, das wahlweise an entweder R¹ oder R² kovalent gebunden sein kann).

6. Hemmer nach einem der vorhergehenden Ansprüche, umfassend mindestens eine Wiederholungseinheit der Formel (VI): 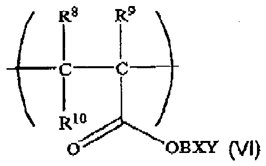 wobei X und Y die in einem der Ansprüche 1 - 3 aufgeführte Definition aufweisen; und
R⁸, R⁹ und R¹⁰ jeweils unabhängig Wasserstoff, eine wahlweise substituierte Alkyl- oder Arylgruppe, die 1 bis 6 Kohlenstoffatome aufweist, -CO₂BXY, -CO₂Z, -SO₃Z oder -PO₃Z₂ sind).

7. Inbibitor nach einem der Ansprüche 1 bis 6, umfassend 500 - 500.000 Gew.-ppm Bor, auf das Gesamtgewicht des Polymers bezogen.

8. Zusammensetzung umfassend einen polymeren Kesselsteinhemmer wie in einem der Ansprüche 1 bis 7 definiert, und einen Träger.

9. Verfahren für die Herstellung eines polymeren Kesselsteinhemmers wie in einem der Ansprüche 1 bis 7 definiert, umfassend das Polymerisieren von Monomeren in Gegenwart einer borhaltigen Verbindung.

10. Verfahren nach Anspruch 9, wobei die borhaltige Verbindung ein anorganisches Borat ist.

11. Verwendung eines Polymers wie in einem der Ansprüche 1 bis 7 definiert, als Kesselsteinhemmer.

12. Verfahren zum Behandeln oder Verhindern von Kesselstein in einem wasserhaltigen System, umfassend das Kontaktieren des Systems mit einem polymeren Kesselsteinhemmer wie in einem der Ansprüche 1 bis 7 definiert.

13. Verfahren zum Unterdrücken und/oder Verhindern von Kesselstein in einem wasserhaltigen System nach Anspruch 12, des Weiteren Folgendes umfassend:
i) das Kontaktieren des Systems mit einem polymeren Kesselsteinhemmer wie in einem der Ansprüche 1 bis 7 definiert;
ii) das Abnehmen einer Probe von Wasser aus dem wasserhaltigen System;
iii) das Beurteilen des Borgehalts der Probe;
iv) das Verwenden des beurteilten Borgehalts, um die Menge des in der Probe vorliegenden Kesselsteinhemmers zu bestimmen; und
v) wahlweise das Kontaktieren des Systems mit weiterem Kesselsteinhemmer.

14. Verfahren zum Erfassen eines polymeren Kesselsteinhemmers wie in einem der Ansprüche 1 bis 7 definiert, in einer Probe, die aus einem wasserhaltigen System abgenommen worden ist, umfassend:
i) das Beurteilen des Borgehalts der Probe; und
ii) das Verwenden des beurteilten Borgehalts zum Bestimmen der Menge an in der Probe vorliegendem Kesselsteinhemmer.

15. Verfahren nach einem der Ansprüche 12 bis 14, wobei das wasserhaltige System ein Wärmeaustauschersystem, Entsalzungssystem, Gaswäscher oder ein Kohlenwasserstoffbohrloch, bevorzugt ein Kohlenwasserstoffbohrloch ist.

16. Verfahren nach Anspruch 13 oder Anspruch 14, wobei das wasserhaltige System ein Kohlenwasserstoffbohrloch ist und die Probe aus produziertem Fluid erhalten wird.

17. Kit zum Bestimmen der Menge an Kesselsteinhemmer, der in einem wasserhaltigen System vorliegt, umfassend:
i) einen Behälter, der einen polymeren Kesselsteinhemmer wie in einem der Ansprüche 1 bis 7 definiert, umfasst; und
ii) einen Satz von Kalibrationsproben bekannter Konzentration des Kesselsteinhemmers.

## Revendications

1. Inhibiteur polymère de tartre, dans lequel ledit inhibiteur comprend au moins un atome de bore présent dans une chaîne latérale comprenant un groupe de formule (II): 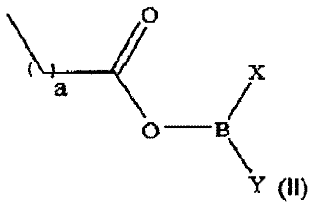 dans laquelle X et Y sont chacun indépendamment R', OR' ou OCOR', où R' est H ou des radicaux organiques éventuellement substitués ayant de 1 à 20 atomes de carbone; et a est 0 ou un nombre entier d'une valeur allant de 1 à 3.

2. Inhibiteur tel que revendiqué selon la revendication 1, dans lequel X et Y ne sont pas pontants.

3. Inhibiteur tel que revendiqué selon la revendication 1 ou 2, dans lequel à la fois X et Y sont OH.

4. Inhibiteur tel que revendiqué selon l'une quelconque des revendications précédentes, dans lequel ledit inhibiteur comprend au moins un monomère de formule (III) ou (IV): 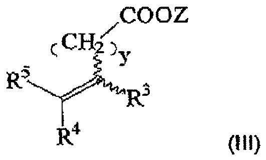 (dans laquelle
Z est un contre-ion;
y a la valeur de 0 ou est un nombre entier d'une valeur allant de 1 à 3; et
R³, R⁴ et R⁵ sont chacun indépendamment un atome d'hydrogène, un groupe alkyle ou aryle éventuellement substitué ayant de 1 à 6 atomes de carbone, -CO₂Z, -SO₃Z ou -PO₃Z₂), 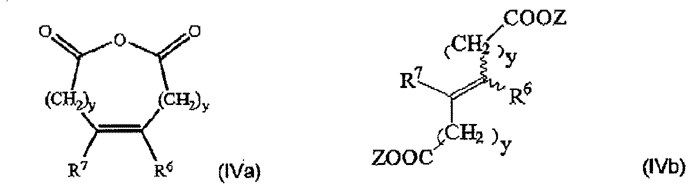 (dans lesquelles
Z est un contre-ion;
chaque y est indépendamment 0 ou un nombre entier d'une valeur allant de 1 à 3;
et
R⁶ et R⁷ sont chacun indépendamment un atome d'hydrogène, un groupe alkyle ou aryle éventuellement substitué ayant de 1 à 6 atomes de carbone, -CO₂Z, -SO₃Z ou - PO₃Z₂).

5. Inhibiteur tel que revendiqué selon l'une quelconque des revendications précédentes, dans lequel ledit inhibiteur comprend un monomère de formule (V): 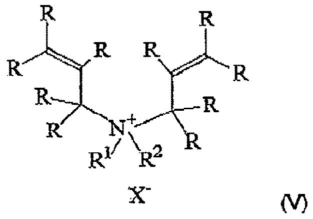 (dans laquelle
R¹ et R² sont chacun indépendamment un atome d'hydrogène ou des radicaux organiques éventuellement substitués ayant de 1 à 20 atomes de carbone;
chaque R est indépendamment sélectionné parmi un atome d'hydrogène et des radicaux organiques ayant de 1 à 20 atomes de carbone, et
X est un contre-ion qui peut éventuellement être lié de manière covalente soit à R¹ soit à R²).

6. Inhibiteur tel que revendiqué selon l'une quelconque des revendications précédentes comprenant au moins un motif de répétition de formule (VI): 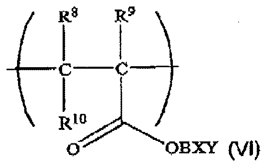 dans laquelle X et Y sont tels que définis ci-dessus dans l'une quelconque des revendication 1 à 3; et
R⁸, R⁹ et R¹⁰ sont chacun indépendamment un atome d'hydrogène, un groupe alkyle ou aryle éventuellement substitué ayant de 1 à 6 atomes de carbone, -CO₂BXY, - CO₂Z, -SO₃Z ou -PO₃Z₂.

7. Inhibiteur tel que revendiqué selon l'une quelconque des revendications 1 à 6, comprenant 500 à 500 000 ppm de bore en pds sur la base du poids total du polymère.

8. Composition comprenant un inhibiteur polymère de tartre tel que défini selon l'une quelconque des revendications 1 à 7 et un support.

9. Procédé de préparation d'un inhibiteur polymère de tartre tel que défini selon l'une quelconque des revendications 1 à 7 comprenant la polymérisation de monomères en présence d'un composé contenant du bore.

10. Procédé tel que revendiqué selon la revendication 9, dans lequel ledit composé contenant du bore est un borate inorganique.

11. Utilisation d'un polymère tel que défini selon l'une quelconque des revendications 1 à 7 comme inhibiteur de tartre.

12. Procédé de traitement ou de prévention du tartre dans un système contenant de l'eau, comprenant la mise en contact dudit système avec un inhibiteur polymère de tartre tel que défini selon l'une quelconque des revendications 1 à 7.

13. Procédé de régulation et/ou de prévention du tartre dans un système contenant de l'eau tel que revendiqué selon la revendication 12, comprenant en outre:
i) la mise en contact dudit système avec un inhibiteur polymère de tartre tel que défini selon l'une quelconque des revendications 1 à 7;
ii) le recueil d'un échantillon d'eau provenant dudit système contenant de l'eau;
iii) l'évaluation de la teneur en bore dudit échantillon;
iv) l'utilisation de ladite teneur évaluée du bore pour déterminer la quantité d'inhibiteur de tartre présent dans ledit échantillon; et
v) éventuellement, la mise en contact dudit système avec l'inhibiteur supplémentaire de tartre.

14. Procédé de détection d'un inhibiteur polymère de tartre tel que défini selon l'une quelconque des revendications 1 à 7 dans un échantillon prélevé dans un système contenant de l'eau comprenant;
i) l'évaluation de la teneur en bore dudit échantillon, et
ii) l'utilisation de ladite teneur évaluée du bore pour déterminer la quantité d'inhibiteur de tartre présent dans ledit échantillon.

15. Procédé tel que revendiqué selon l'une quelconque des revendications 12 à 14, dans lequel ledit système contenant de l'eau est un système d'échange thermique, un système de dessalement, un purificateur de gaz ou un puits d'hydrocarbure, de préférence un puits d'hydrocarbure.

16. Procédé tel que revendiqué selon la revendication 13 ou la revendication 14, dans lequel ledit système contenant de l'eau est un puits d'hydrocarbure et ledit échantillon est obtenu à partir du liquide produit.

17. Trousse de détermination de la quantité d'inhibiteur de tartre présent dans un système contenant de l'eau comprenant:
i) un récipient comprenant un inhibiteur polymère de tartre tel que défini selon l'une quelconque des revendications 1 à 7; et
ii) un ensemble d'échantillons d'étalonnage de concentration connue dudit inhibiteur de tartre.
